# EUROPÄISCHE PATENTSCHRIFT

(11) **EP 1 323 567 B1**
(45) Veröffentlichungstag und Bekanntmachung des Hinweises auf die Patenterteilung: **11.04.2007**
(21) Anmeldenummer: 02024216.0
(22) Anmeldetag: 30.10.2002
(51) Int. Cl.: B60K 15/03

(54) **Kraftstofffördereinheit**
Fuel supply unit
Unité d'alimentation en carburant

(30) Priorität: 13.12.2001 DE 10161403
(43) Veröffentlichungstag der Anmeldung: 02.07.2003
(73) Patentinhaber: SIEMENS AKTIENGESELLSCHAFT, 80333 München (DE)
(72) Erfinder: Herzog, Bernd, 65597 Hünfelden (DE); Nather, Helmut, 65520 Bad Camberg (DE)

(56) Entgegenhaltungen:
- EP-A- 1 162 100
- DE-A1- 19 912 642
- DE-A1- 19 932 356

## Beschreibung

Die Erfindung betrifft eine Kraftstofffördereinheit für ein Kraftfahrzeug mit mehreren in einem Kraftstoffbehälter anzuordnenden Schwalltöpfen und mit Förderpumpen zum Ansaugen von Kraftstoff aus den Schwalltöpfen und zur Förderung zu einer Brennkraftmaschine des Kraftfahrzeuges und mit einem Verbindungselement zur Verbindung der Schwalltöpfe innerhalb des Kraftstoffbehälters.

Es ist bekannt, zwei Kraftstofffördereinheiten in heutigen Kraftstoffbehältern einzusetzen, wenn die Leistung einer einzelnen Förderpumpe nicht ausreicht. Hierbei sind jeweils ein Schwalltopf über eine Bodenabstützung mit einem in einer Montageöffnung des Kraftstoffbehälters abdichtend eingesetzten Flansch verbunden. Die Bodenabstützungen spannen die Schwalltöpfe jeweils gegen den Boden des Kraftstoffbehälters vor. In jedem der Schwalltöpfe ist eine elektrisch angetriebene Förderpumpe eingesetzt. Die aus der Praxis bekannte Kraftstofffördereinheit hat damit zwei Flansche, welche unabhängig voneinander in den Montageöffnungen montiert werden.

Aus der EP 1 162 100 A2 ist eine Fördereinheit mit zwei Schwalltöpfen bekannt, die mit Führungsschienen an den Schwalltöpfen ausgebildet ist. Dadurch sind die Schwalltöpfe zueinander verschiebbar.

Der Erfindung liegt das Problem zugrunde, eine Kraftstofffördereinheit so zu gestalten, dass sie kostengünstig herstellbar und besonders einfach montierbar ist.

Dieses Problem wird erfindungsgemäß dadurch gelöst, dass das Verbindungselementeinen die Schwalltöpfe miteinander verbindenden Bolzen aufweist und dass die Schwalltöpfe einstückig mit den die Bolzen aufnehmenden Hülsen gefertigt sind.

Durch diese Gestaltung wird zum Einsetzen mehrerer Schwalltöpfe nur eine einzige Montageöffnung in dem Kraftstoffbehälter und ein einziger Flansch benötigt. Die Schwalltöpfe lassen sich dabei einzeln in den Kraftstoffbehälter einsetzen und innerhalb des Kraftstoffbehälters miteinander verbinden.

Hierdurch gestaltet sich die erfindungsgemäße Kraftstofffördereinheit besonders kostengünstig und lässt sich besonders einfach in dem Kraftstoffbehälter montieren. Der Kraftstoffbehälter lässt sich dank der Erfindung ebenfalls kostengünstig fertigen. Ein weiterer Vorteil dieser Gestaltung besteht darin, dass durch die geringe Anzahl der Dichtbereiche der Flansche die Gefahr von Undichtigkeiten sowie eine Permeation von Kraftstoff in die Umwelt besonders gering gehalten werden.

Zur weiteren Vereinfachung der Montage der erfindungsgemäßen Kraftstofffördereinheit trägt es bei, wenn das Verbindungselement einen elektrischen Anschluss für jeweils eine in den Schwalltöpfen angeordnete Förderpumpe hat.

Ein Leerlaufen des einen Schwalltopfes bei gefülltem zweiten Schwalltopf lässt sich gemäß einer anderen vorteilhaften Weiterbildung der Erfindung vermeiden, wenn die Schwalltöpfe jeweils einander gegenüberstehende Ausnehmungen aufweisen. Damit haben die Schwalltöpfe einen Überströmbereich für überschüssigen Kraftstoff.

Die Ausrichtung der Schwalltöpfe zueinander gestaltet sich gemäß einer anderen vorteilhaften Weiterbildung der Erfindung besonders einfach, wenn im Bereich der Ausnehmungen Stege angeordnet sind.

Eine dauerhafte Ausrichtung der Schwalltöpfe zueinander lässt sich gemäß einer anderen vorteilhaften Weiterbildung der Erfindung einfach gewährleisten, wenn die Schwalltöpfe einstükkig mit den Stegen gefertigt sind.

Die erfindungsgemäße Kraftstofffördereinheit gestaltet sich konstruktiv besonders einfach, wenn eine an einem den Kraftstoffbehälter verschließenden Flansch befestigte Bodenabstützung einen einzigen der Schwalltöpfe haltert.

Zur weiteren Vereinfachung des Aufbaus der erfindungsgemäßen Kraftstofffördereinheit trägt es bei, wenn ein Füllstandssensor an einem einzigen der Schwalltöpfe befestigt ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch einen Kraftstoffbehälter eines Kraftfahrzeuges mit einer darin angeordneten erfindungsgemäßen Kraftstofffördereinheit,
- Fig.2: eine perspektivische Darstellung der erfindungsgemäßen Kraftstofffördereinheit aus Figur 1,
- Fig.3: einen Teilschnitt durch die Kraftstofffördereinheit aus Figur 2 entlang der Linie III - III.
- Fig.4: eine Ansicht auf eine Ausnehmung der Kraftstofffördereinheit aus Position IV aus Figur 3.

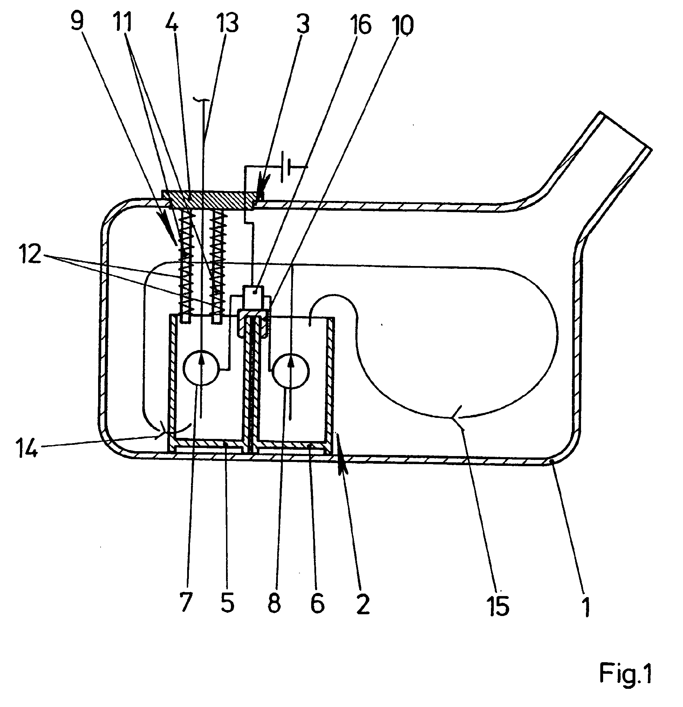

Figur 1 zeigt einen Kraftstoffbehälter 1 mit einer darin angeordneten Kraftstofffördereinheit 2. Die Kraftstofffördereinheit 2 weist einen in eine Montageöffnung 3 des Kraftstoffbehälters 1 dichtend eingesetzten Flansch 4 und zwei Schwalltöpfe 5, 6 auf. In den Schwalltöpfen 5, 6 ist jeweils eine Förderpumpe 7, 8 angeordnet. Der Flansch 4 ist über eine Bodenabstützung 9 mit einem der Schwalltöpfe 5 verbunden. Über ein Verbindungselement 10 sind die Schwalltöpfe 5, 6 aneinander befestigt. Die Bodenabstützung 9 weist zwei Rohre 11 zur Führung des einen Schwalltopfes 5 gegenüber dem Flansch 4 und Federelemente 12 zur Vorspannung der Schwalltöpfe 5, 6 gegen den Boden des Kraftstoffbehälters 1 auf. Die Förderpumpen 7, 8 fördern Kraftstoff in eine gemeinsame, zu einer nicht dargestellten Brennkraftmaschine des Kraftfahrzeuges führenden Vorlaufleitung 13 und zu zwei im Kraftstoffbehälter 1 angeordneten Saugstrahlpumpen 14, 15. Das Verbindungselement 10 haltert zudem einen elektrischen Anschluss 16 für die Förderpumpen 7, 8.

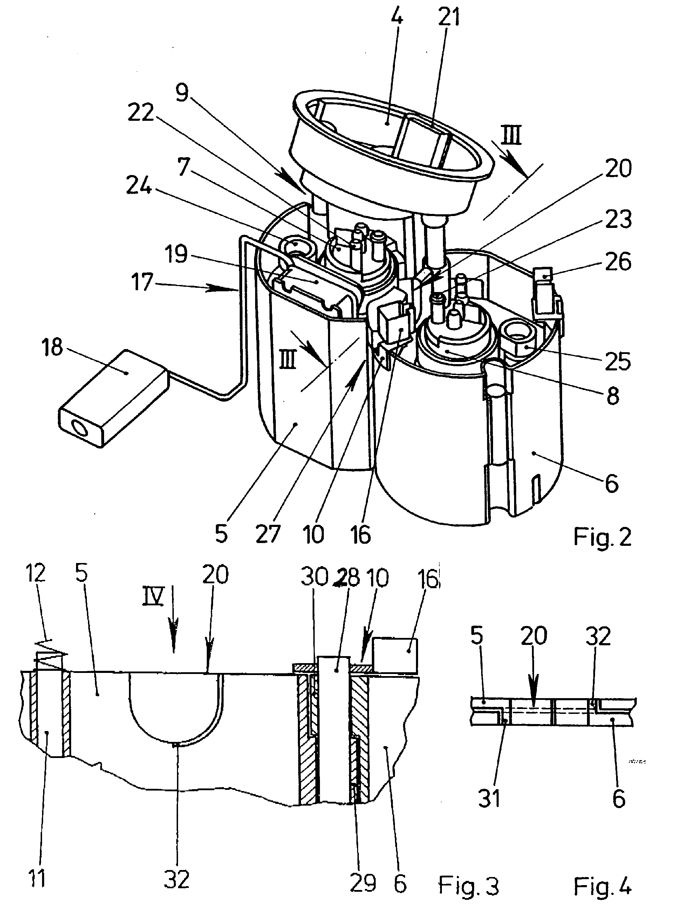

Figur 2 zeigt perspektivisch die Kraftstofffördereinheit 2 aus Figur 1. Zur Vereinfachung sind elektrische Leitungen und Kraftstoffleitungen nicht dargestellt. Einer der Schwalltöpfe 5 haltert einen Füllstandssensor 17 mit einem Schwimmer 18 und mit einem Vorratsgeber 19. Der Vorratsgeber 19 erzeugt elektrische Signale in Abhängigkeit von der Stellung des Schwimmers 18. Die Schwalltöpfe 5, 6 weisen in ihrem oberen Bereich einander gegenüberstehende Ausnehmungen 20 auf. Diese Ausnehmungen 20 ermöglichen ein Überströmen von Kraftstoff von dem einen Schwalltopf 5, 6 in den anderen Schwalltopf 5, 6. In dem Flansch 4 ist ein elektrischer Anschluss 21 angeordnet. Die Förderpumpen 7, 8 weisen jeweils Anschlüsse 22, 23 für die zu der in Figur 1 dargestellten Vorlaufleitung 13 führenden Leitungen auf. Auf den Schwalltöpfen 5, 6 befinden sich Anschlüsse 24, 25 und ein Halteklips 26 für die von den in Figur 1 dargestellten Saugstrahlpumpen 14, 15 in die Schwalltöpfe 5, 6 geführten Leitungen sowie für eine nicht dargestellte, von der Brennkraftmaschine des Kraftfahrzeuges in den Kraftstoffbehälter 1 zurückgeführte Rücklaufleitung. Das Verbindungselement 10 hat eine Rastverbindung 27 mit einem der Schwalltöpfe 6.

Figur 3 zeigt in einer Schnittdarstellung durch die Kraftstofffördereinheit aus Figur 2 entlang der Linie III - III, dass das Verbindungselement 10 einen Bolzen 28 haltert. Der Bolzen 28 durchdringt zwei Hülsen 29, 30, wobei jeweils eine Hülse 29, 30 einstückig mit einem der Schwalltöpfe 5, 6 gefertigt ist. Die einander gegenüberstehenden Ausnehmungen 20 der Schwalltöpfe 5, 6 sind in einer Ansicht von Position IV aus Figur 3 in Figur 4 dargestellt. Die Schwalltöpfe 5, 6 weisen jeweils Stege 31, 32 auf, über die sie gegeneinander ausgerichtet sind.

## Patentansprüche

1. Kraftstofffördereinheit für ein Kraftfahrzeug mit mehreren in einem Kraftstoffbehälter (1) anzuordnenden Schwalltöpfen (5, 6) und mit Förderpumpen (7, 8) zum Ansaugen von Kraftstoff aus den Schwalltöpfen (5, 6) und zur Förderung zu einer Brennkraftmaschine des Kraftfahrzeuges und mit einem Verbindungselement (10) zur Verbindung der Schwalltöpfe (5, 6) innerhalb des Kraftstoffbehälters (1), **dadurch gekennzeichnet, dass** das Verbindungselement (10) einen die Schwalltöpfe (5, 6) miteinander verbindenden Bolzen (28) aufweist und dass die Schwalltöpfe (5, 6) einstückig mit den Bolzen (28) aufnehmenden Hülsen (29, 30) gefertigt sind.

2. Kraftstofffördereinheit nach zumindest einem der vorhergehenden Ansprüche, **dadurch gekennzeichnet, dass** das Verbindungselement (10) einen elektrischen Anschluss (16) für jeweils eine in den Schwalltöpfen (5, 6) angeordnete Förderpumpe (7, 8) hat.

3. Kraftstofffördereinheit nach zumindest einem der vorhergehenden Ansprüche, **dadurch gekennzeichnet, dass** die Schwalltöpfe (5, 6) jeweils einander gegenüberstehende Ausnehmungen (20) aufweisen.

4. Kraftstofffördereinheit nach zumindest einem der vorhergehenden Ansprüche, **dadurch gekennzeichnet, dass** im Bereich der Ausnehmungen (20) Stege (31, 32) angeordnet sind.

5. Kraftstofffördereinheit nach zumindest einem der vorhergehenden Ansprüche, **dadurch gekennzeichnet, dass** die Schwalltöpfe (5, 6) einstückig mit den Stegen (31, 32) gefertigt sind.

6. Kraftstofffördereinheit nach zumindest einem der vorhergehenden Ansprüche, **dadurch gekennzeichnet, dass** eine an einem den Kraftstoffbehälter (1) verschließenden Flansch (4) befestigte Bodenabstützung (9) einen einzigen der Schwalltöpfe (5) haltert.

7. Kraftstofffördereinheit nach zumindest einem der vorhergehenden Ansprüche, **dadurch gekennzeichnet, dass** ein Füllstandssensor (17) an einem einzigen der Schwalltöpfe (5) befestigt ist.

## Claims

1. Fuel feed unit for a motor vehicle with a plurality of anti-surge pots (5, 6) to be arranged in a fuel tank (1) and with feed pumps (7, 8) for drawing in fuel from the anti-surge pots (5, 6) and feeding it to an internal combustion engine of the motor vehicle, and with a connecting element (10) for connecting the anti-surge pots (5, 6) within the fuel tank (1), **characterized in that** the connecting element (10) has a pin (28) that connects the anti-surge pots (5, 6) to one another and **in that** the anti-surge pots (5, 6) are manufactured in one piece with the sleeves (29, 30) holding the pins (28).

2. Fuel feed unit according to at least one of the preceding claims, **characterized in that** the connecting element (10) has an electrical terminal (16) for a respective feed pump (7, 8) arranged in each of the anti-surge pots (5, 6).

3. Fuel feed unit according to at least one of the preceding claims, **characterized in that** the anti-surge pots (5, 6) each have mutually facing apertures (20).

4. Fuel feed unit according to at least one of the preceding claims, **characterized in that** webs (31, 32) are arranged in the region of the apertures (20).

5. Fuel feed unit according to at least one of the preceding claims, **characterized in that** the anti-surge pots (5, 6) are manufactured in one piece with the webs (31, 32).

6. Fuel feed unit according to at least one of the preceding claims, **characterized in that** a bottom support (9), which is attached to a flange (4) that closes the fuel tank (1), holds just one of the anti-surge pots (5).

7. Fuel feed unit according to at least one of the preceding claims, **characterized in that** a fuel-level sensor (17) is attached to just one of the anti-surge pots (5).

## Revendications

1. Unité d'alimentation en carburant destinée à un véhicule automobile et comportant plusieurs pots d'accumulation (5, 6) à mettre en place dans un réservoir à carburant (1) et des pompes d'alimentation (7, 8), permettant d'aspirer du carburant dans les pots d'accumulation (5, 6) et de le transférer vers un moteur à combustion interne du véhicule automobile, et comportant un élément de liaison (10) permettant de lier les pots d'accumulation (5, 6) à l'intérieur du réservoir à carburant (1), **caractérisé par le fait que** l'élément de liaison (10) comporte un boulon (28) liant les pots d'accumulation (5, 6) l'un à l'autre et que les pots d'accumulation (5, 6) sont fabriqués en une seule pièce avec les douilles (29, 30) qui accueillent le boulon (28).

2. Unité d'alimentation en carburant selon au moins l'une des revendications précédentes, **caractérisé par le fait que** l'élément de liaison (10) a un raccordement électrique (16) pour, dans chaque cas, une pompe d'alimentation (7, 8) montée dans les pots d'accumulation (5, 6).

3. Unité d'alimentation en carburant selon au moins l'une des revendications précédentes, **caractérisé par le fait que** les pots d'accumulation (5, 6) comportent des évidements (20) se faisant réciproquement face.

4. Unité d'alimentation en carburant selon au moins l'une des revendications précédentes, **caractérisé par le fait que** des pattes (31, 32) sont disposées dans la zone des évidements (20).

5. Unité d'alimentation en carburant selon au moins l'une des revendications précédentes, **caractérisé par le fait que** les pots d'accumulation (5, 6) sont fabriqués en une seule pièce avec les pattes (31, 32).

6. Unité d'alimentation en carburant selon au moins l'une des revendications précédentes, **caractérisé par le fait qu'**un appui sur le fond (9) fixé à une flasque (4) qui ferme le réservoir à carburant (1) maintient un seul des pots d'accumulation (5).

7. Unité d'alimentation en carburant selon au moins l'une des revendications précédentes, **caractérisé par le fait qu'**un capteur de niveau de remplissage (17) est fixé à un seul des pots d'accumulation (5).
